# FASCICULE DE BREVET EUROPEEN

(11) **EP 2 788 219 B1**
(45) Date de publication et mention de la délivrance du brevet: **20.04.2022**
(21) Numéro de dépôt: 12795425.3
(22) Date de dépôt: 03.12.2012
(51) Int. Cl.: B60L 7/26

(54) **ESTIMATION D'ENERGIE RECUPEREE**
SCHÄTZUNG DER REKUPERIERTEN ENERGIE
ESTIMATION OF RECUPERATED ENERGY

(30) Priorité: 05.12.2011 FR 1161136
(43) Date de publication de la demande: 15.10.2014
(73) Titulaire: Renault s.a.s, 92100 Boulogne Billancourt (FR)
(72) Inventeur: AZZI, Hamid, F-78310 Maurepas (FR); BRUNEAU, Aymeric, F-78600 Maisons-Laffitte (FR); GUILBERT, Bruno, F-78370 Chaville (FR)
(74) Mandataire: Renault Group
(86) Numéro de dépôt international: PCT/EP2012/074258
(87) Numéro de publication internationale: WO 2013/083524

(56) Documents cités:
- EP-A1- 2 275 314
- EP-A2- 1 839 985
- EP-A2- 2 374 677

## Description

L'invention concerne l'estimation d'énergie récupérée par un véhicule équipé d'un moyen de freinage régénératif, par exemple un moyen de freinage électrique.

Le véhicule peut par exemple être un véhicule électrique ou hybride.

Sur un véhicule équipé d'au moins un moteur de traction ou de propulsion électrique, il est possible, sous certaines conditions, d'utiliser le moteur électrique comme générateur et d'obtenir ainsi un moyen de freinage électrique. Une telle utilisation est avantageuse car régénérative, elle permet de récupérer une partie de l'énergie afin de recharger les batteries.

Lorsque le conducteur appuie sur la pédale de frein, une consigne de freinage globale issue de cette pédale peut être au moins en partie transformée en une consigne de freinage régénérative, par exemple en consigne de freinage électrique.

A ce système de récupération d'énergie, on peut ajouter un système de récupération d'énergie supplémentaire permettant de recharger la batterie à partir des signaux issus de la pédale d'accélération.

En effet, un freinage électrique peut être sollicité aussi lorsque le conducteur lève le pied de la pédale d'accélération. Dans ce dernier cas, on parle de décélération sans freinage.

En particulier, le document FR2945243 décrit un procédé pour générer un tel frein moteur artificiel lorsque la pédale d'accélération n'est pas sollicitée.

Il est également connu, par le document un dispositif permettant de stopper le véhicule en appliquant seulement un freinage régénératif lors du lever de pied de la pédale d'accélérateur.

Enfin on connaît des systèmes de répartition d'une consigne de freinage globale entre une consigne de freinage régénérative et une consigne de freinage hydraulique, en proposant des moyens de calcul pour faire varier la part de freinage régénératif, soit en cas de collision du véhicule (EP1839985), soit afin d'atteindre une position cible avec une vitesse cible (EP2374677).

Il a été envisagé d'estimer l'énergie récupérée par la batterie en plaçant un capteur d'intensité de courant en entrée de la batterie du véhicule. Cette valeur d'énergie récupérée est une valeur globale et ne fournit pas en soit de renseignement sur les performances de chacun des systèmes de récupération.

Il existe un besoin pour une estimation des performances ou de l'utilité d'un, plusieurs ou de chaque système de récupération d'énergie.

Il est proposé un procédé d'estimation d'énergie récupérée par un véhicule équipé d'un moyen de freinage régénératif, d'au moins deux systèmes de récupération d'énergie générant aux moins deux valeurs de consigne respectives et destinées au moyen de freinage régénératif, le procédé comprenant une étape de réception d'une desdites valeurs de consigne et une étape de calcul d'une valeur d'énergie à partir de cette valeur de consigne reçue.

Ainsi, cette valeur d'énergie est calculée à partir d'une valeur de consigne propre à un système de récupération d'énergie. Ce procédé permet ainsi d'estimer l'énergie récupérée grâce à ce système.

Cette estimation peut permettre d'évaluer l'apport de ce système de récupération d'énergie, aussi bien lors d'un usage client que lors de de cycles dédiés d'homologation. Dans le cadre d'une utilisation client, il est possible d'obtenir des données sur les performances et la plus-value de ce système de récupération d'énergie, ces données pouvant être moyennées sur un parc de véhicules à pédale découplée.

Les au moins deux systèmes de récupération d'énergie peuvent par exemple comprendre un premier système de récupération d'énergie à partir des signaux issus de la pédale de frein et un deuxième système de récupération d'énergie à partir des signaux issus de la pédale d'accélération. Ce deuxième système de récupération d'énergie peut permettre de simuler un freinage moteur lorsque le conducteur lève le pied de la pédale d'accélération.

Le véhicule étant équipé de plusieurs systèmes de récupération d'énergie, un dispositif sommateur peut permettre d'additionner les signaux issus de ces systèmes respectifs. On pourra avantageusement prévoir que la valeur de consigne reçue soit la valeur de consigne également reçue en entrée du sommateur. L'estimation de l'énergie liée à ce système de récupération est ainsi menée à partir de la valeur propre à ce système la plus aboutie.

Selon l'invention, le procédé comprend une étape de réception d'une autre valeur et une étape de calcul d'une valeur d'énergie supplémentaire à partir au moins de cette autre valeur.

Ainsi, le procédé peut permettre d'évaluer la part relative du système de récupération d'énergie pour lequel une valeur de consigne a servi de base au calcul de l'énergie.

Selon l'invention, cette autre valeur comprend
- une valeur de mesure obtenue d'un capteur à l'entrée de la batterie - on estime ainsi une énergie récupérée globale et une énergie récupérée liée au système de récupération d'énergie, et/ou selon une exemple,
- une valeur de consigne - on peut ainsi faire l'économie d'un capteur.

Cette dernière valeur de consigne peut par exemple comprendre :
- une valeur de consigne régénérative obtenue suite à une sommation des au moins deux valeurs de consigne des au moins deux systèmes de récupération d'énergie, et/ou
- l'autre desdites valeurs de consigne.

Selon l'invention, dans le cas d'une estimation à partir d'une valeur représentative de l'énergie récupérée globale, comme la valeur de mesure obtenue d'un capteur à l'entrée de la batterie ou la valeur de consigne régénérative, on estime une valeur d'énergie récupérée globale. Selon l'invention, le véhicule est équipé de seulement deux systèmes de récupération d'énergie, l'énergie récupérée liée à l'autre système de récupération d'énergie est estimée en effectuant une différence entre la valeur estimée d'énergie récupérée globale et la valeur estimée d'énergie liée au système de récupération d'énergie.

Lorsque l'autre valeur à partir de laquelle une valeur d'énergie est estimée est l'autre des valeurs de consigne, alors les estimations d'énergie menées conduisent directement à des valeurs d'énergies liées chacune à un système de récupération d'énergie.

Le procédé décrit ci-dessus peut permettre de discriminer les données d'énergie électrique récupérées au lever de pied de la pédale d'accélérateur et au freinage, lors de toute utilisation client, ce pour un grand nombre de données moyennées sur un parc de véhicules électriques à pédale découplée, parc de véhicules réel, appartenant à une même entité, ou virtuel, parc de véhicules de tiers, dont la gestion et l'entretien sont exécutés par une même entité.

Avantageusement et de façon non limitative, le procédé peut comprendre, pour la valeur de consigne reçue et/ou pour l'autre valeur, une étape de multiplication par une valeur de vitesse du véhicule, de façon à obtenir une valeur de puissance.

Les différentes valeurs de puissance obtenues peuvent ensuite être intégrées temporellement de façon à obtenir une valeur d'énergie.

Avantageusement et de façon non limitative, on peut prévoir de stocker en mémoire la valeur estimée d'énergie récupérée ainsi qu'une valeur de distance freinée associée à cette valeur estimée, et/ou une valeur de distance parcourue issue de donnée d'odométrie.

La valeur de distance freinée, par exemple en kilomètres freinés, peut fournir une indication de l'efficacité de la récupération d'énergie. La valeur de distance parcourue correspondant à ces kilomètres freinés et/ou à cette valeur d'énergie, peut fournir une indication du type d'utilisation du véhicule ayant conduit à cette récupération d'énergie. Par exemple, une énergie récupérée sur 100 kilomètres freinés et 300 kilomètres parcourus peut correspondre à une utilisation urbaine, alors qu'une énergie récupérée sur 100 kilomètres freinés et 10000 kilomètres parcourus peut correspondre à une utilisation sur autoroute.

Avantageusement et de façon non limitative, le procédé peut comprendre une étape d'association d'une valeur d'énergie à une mémoire tampon (« buffer » en anglais). On peut en effet prévoir plusieurs mémoires tampon par véhicule afin de conserver davantage de valeurs.

Avantageusement et de façon non limitative, le procédé peut comprendre une étape de comparaison de la valeur de distance freinée associée à la valeur d'énergie à un seuil. Si la valeur de distance freinée dépasse ce seuil, on peut prévoir de remettre à zéro l'intégrateur et d'affecter la prochaine valeur d'énergie à une autre mémoire tampon. Ainsi, les valeurs lues dans les mémoires tampon précédentes correspondent à sensiblement une même distance freinée, par exemple 100 km.

Selon l'invention, il est en outre proposé un programme d'ordinateur comportant des instructions pour exécuter les étapes du procédé décrit ci-dessus.

Selon un exemple, il est en outre proposé un dispositif d'estimation d'énergie récupérée par un véhicule équipé d'un moyen de freinage régénératif, d'au moins deux systèmes de récupération d'énergie générant aux moins deux valeurs de consigne respectives et destinées au moyen de freinage régénératif, le dispositif comprenant des moyens de réception d'une desdites valeurs de consigne, par exemple un port d'entrée ou un bus de lecture, et des moyens de calcul d'une valeur d'énergie à partir de cette valeur de consigne reçue, par exemple un cœur de processeur.

Ce dispositif peut par exemple comprendre ou être intégré dans un ou plusieurs processeurs, par exemple un microcontrôleur, un microprocesseur, un DSP (de l'anglais « Digital Signal Processor »), ou autre.

Le dispositif d'estimation d'énergie peut comporter des ressources d'estimation de l'énergie récupérée sur une commande de lever le pied de la pédale d'accélération, des ressources d'estimation de l'énergie récupérée sur une commande de freinage électrique, et des ressources de mémorisation des énergies récupérées, comportant au moins des mémoires dynamiques à rafraîchissement en fonction d'une valeur de distance freinée déterminée.

Les ressources d'estimation de l'énergie récupérée sur une commande de lever le pied de la pédale d'accélération, peuvent comporter :
- des moyens diviseurs recevant une valeur de consigne de freinage de lever de pied et une valeur du rayon des roues du véhicule et délivrant une valeur de force instantanée de freinage par inertie ;
- des moyens multiplicateurs recevant l'amplitude de la valeur de force instantanée de freinage par inertie et une valeur de l'amplitude de la vitesse instantanée du véhicule et délivrant une valeur de puissance mécanique instantanée récupérée par inertie ;
- des moyens intégrateurs recevant la valeur de puissance mécanique instantanée récupérée par inertie et des valeurs d'initialisation et délivrant sur la durée/ distance de freinage une valeur d'énergie mécanique récupérée par inertie.

Les ressources d'estimation de l'énergie récupérée sur une commande de freinage électrique peuvent comprendre :
- des moyens diviseurs recevant une valeur de consigne de freinage électrique et la valeur du rayon des roues du véhicule, ces moyens diviseurs délivrant une valeur de force instantanée de freinage électrique ;
- des moyens multiplicateurs recevant la valeur d'amplitude de force instantanée de freinage électrique et la valeur de l'amplitude de la vitesse instantanée du véhicule et délivrant une valeur de puissance électrique instantanée récupérée ;
- des moyens intégrateurs recevant la valeur de puissance électrique instantanée récupérée et des valeurs d'initialisation et délivrant sur la durée/distance de freinage une valeur d'énergie électrique récupérée.

Les ressources de mémorisation peuvent comprendre :
- une première mémoire tampon courante destinée à mémoriser les valeurs d'énergie mécanique et électrique récupérée au cours d'un déplacement actuel du véhicule ;
- une pluralité de mémoires tampons spécifiques, destinées chacune à mémoriser les valeurs d'énergie mécanique et électrique récupérées, par tranche de distance freinée déterminée.

Selon l'invention, il est en outre proposé un véhicule, par exemple un véhicule automobile, comprenant un programme d'ordinateur qui comporte des instructions pour exécuter les étapes du procédé d'estimation d'énergie récupérée décrit ci-dessus.

Dans la présente demande, la notion de véhicule à motorisation électrique recouvre celle de motorisation totalement électrique et/ou hybride.

Le dispositif objet de l'invention sera mieux compris à la lecture de la description et à l'observation des dessins ci-après, dans lesquels :
- la figure 1 représente un schéma fonctionnel d'un exemple de dispositif de contrôle de la récupération d'énergie de freinage d'un véhicule à motorisation électrique, selon un mode de réalisation de la présente invention ;
- la figure 2 représente un détail de mise en œuvre d'une estimation de l'énergie récupérée sur une commande de lever le pied de la pédale d'accélération, selon un mode de réalisation de la présente invention ;
- la figure 3 représente un détail de mise en œuvre d'une estimation de l'énergie récupérée sur une commande de freinage électrique, selon un mode de réalisation de la présente invention ;
- la figure 4 représente un schéma fonctionnel d'un exemple d'estimateur de distance freinée, en vue d'un stockage dans des ressources de mémorisation, selon une mise en œuvre de l'invention.

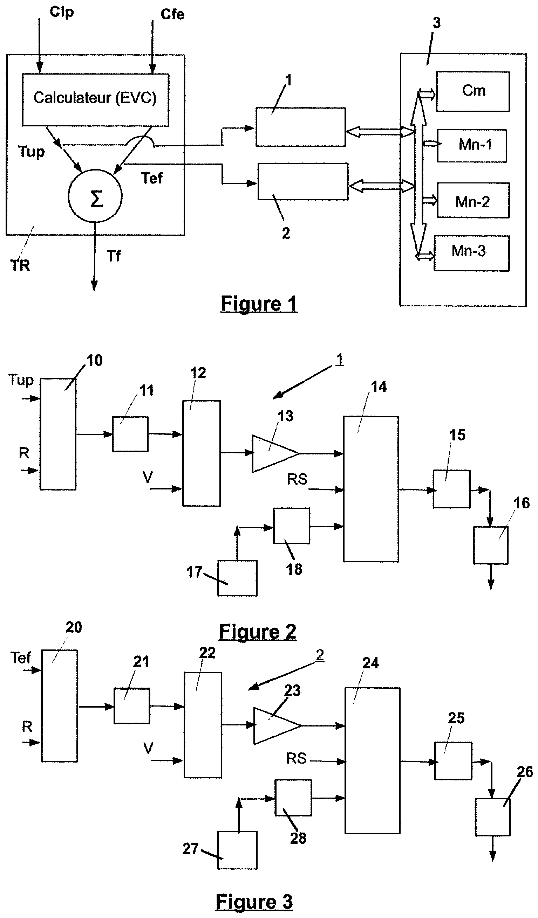

En référence à la figure 1, un dispositif de contrôle de la récupération d'énergie de freinage d'un véhicule à motorisation électrique comprend un répartiteur de couple TR. Ce répartiteur de couple TR comprend un module de calcul, ou calculateur (EVC), recevant un signal de commande Clp issu d'une pédale d'accélération, et un signal de commande de freinage électrique Cfe, issu d'un dispositif de répartition non représenté.

Ce dispositif de répartition (« Torque Blending » en anglais) reçoit en entrée un signal de commande de freinage global, issu d'une pédale de frein, ainsi que d'autres signaux, comme par exemple un signal de vitesse du véhicule. Le dispositif de répartition est agencé pour déterminer à partir du signal de commande de freinage global un signal de commande de freinage électrique Cfe, destiné au moyen de freinage électrique, et un signal de commande de freinage complémentaire, destiné au moyen de freinage complémentaire, par exemple un moyen de freinage hydraulique. Par exemple, le dispositif de répartition comporte un saturateur pour saturer le signal de commande globale par une valeur de freinage maximale réalisable par les moyens de freinage électrique. Le signal de commande de freinage électrique Cfe peut être choisi égal à cette valeur saturée. Puis la valeur saturée est soustraite à la valeur de commande globale reçue en entrée et le signal de commande de freinage complémentaire est choisi égal à cette différence. Le dispositif de répartition peut ainsi comprendre un saturateur et un soustracteur. En outre, le dispositif de répartition peut être agencé de façon à interdire le freinage électrique lorsque la vitesse du véhicule est en-deçà d'un seuil, par exemple 7 km/h. Dit autrement, pour les faibles vitesses, le signal de commande de freinage complémentaire est choisi égal au signal de commande globale directement issu de la pédale de frein.

Le calculateur EVC reçoit donc le signal de commande de freinage électrique Cfe déterminé par le dispositif de répartition en fonction de l'appui effectif sur la pédale de frein, ainsi que le signal de commande Clp issu de la pédale d'accélération. Ce signal Clp indique l'état de la pédale d'accélération.

Le calculateur EVC est agencé pour élaborer une valeur de consigne de couple de lever de pied appliquée, notée Tup, à partir du signal d'état de la pédale d'accélération Clp, lors d'un lever le pied sur cette pédale. Le calculateur peut élaborer ce signal Tup en implémentant par exemple le procédé décrit dans le document FR2945243. Le signal Tup permet de simuler le freinage moteur en cas de lever de pied du conducteur sur la pédale d'accélération, afin que ce dernier garde la sensation de freinage en cas de levée de pied même si ce freinage est électrique.

Le calculateur EVC est agencé pour calculer en outre une consigne de couple de freinage électrique appliquée, notée Tef, à partir du signal de commande de freinage électrique Cfe. Le calculateur peut notamment appliquer un ratio de rapport du réducteur afin de convertir la valeur du signal Cfe de couple à la roue, en valeur de couple moteur. En outre certaines saturations peuvent être effectuées.

Les valeurs de ces commandes de couple appliquées Tup, Tef sont sommées, et la somme Tf ainsi obtenue permet de commander le freinage moteur en conséquence.

Ainsi, un premier système de récupération permet d'effectuer un freinage électrique à partir des signaux issus de la pédale de frein, et un deuxième système de récupération permet d'effectuer un freinage électrique à partir des signaux issus de la pédale d'accélération.

Le premier système de récupération comporte notamment le dispositif de répartition, des moyens de réception du signal Cfe, par exemple un port d'entrée, et des moyens de calcul du signal Tef, par exemple un cœur de processeur.

Le deuxième système de répartition comporte notamment des moyens de réception du signal Clp, par exemple un port d'entrée, et des moyens de calcul du signal Tup, par exemple un cœur de processeur.

Le dispositif comporte en outre des moyens d'estimation de l'énergie récupérée au freinage par chaque système de récupération, à partir des valeurs de commande de couple de freinage appliqué. L'énergie récupérée au freinage est estimée à partir des valeurs de commande précitées, c'est à dire les valeurs de consigne de couple de freinage de lever le pied appliqué, Tup, et de couple de freinage électrique appliqué, Tef.

Un module 1 permet d'estimer l'énergie récupérée suite à une commande de lever de pied de la pédale d'accélération, et un module 2 permet d'estimer l'énergie récupérée suite à une commande de freinage.

Chaque module 1, 2 comporte des moyens de réception des valeurs des signaux Tup, Tef respectives, par exemple des bus de lecture, un ou plusieurs pins d'entrée, un ou plusieurs fils conducteurs reliés à un ou plusieurs pins d'entrée, et/ou des ports d'entrée. Ces modules 1, 2 sont en outre agencés pour recevoir un signal représentatif de la vitesse du véhicule, et une mémoire apte à stocker une valeur de rayon de roues. Chaque module 1, 2 comporte en outre des moyens de traitement pour calculer respectivement deux valeurs d'énergie à partir de ces valeurs reçues, de la vitesse du véhicule et de la valeur de rayon de roues. Ces moyens de traitement, pouvant être intégrés dans un même processeur ou dans des processeurs distincts, seront décrits davantage en référence aux figures 2 et 3.

En outre, des ressources de mémorisation des énergies mécanique et électrique récupérées portant la référence 3 sont prévues. Les ressources de mémorisation précitées comportent, avantageusement, des mémoires dynamiques à rafraîchissement en fonction d'une valeur de distance freinée déterminée. On comprend, en particulier, que l'agencement des ressources de mémorisation précitées permet de s'affranchir de tout trajet spécifique du véhicule, seule la distance freinée étant prise en compte pour le rafraîchissement des mémoires précitées, ainsi qu'il sera décrit ultérieurement dans la description.

Les moyens d'estimation de l'énergie récupérée sur une commande de lever le pied de la pédale d'accélération sont maintenant décrits en liaison avec la figure 2.

En référence à la figure précitée, les moyens 1 comprennent, dans un mode de mise en œuvre préférentiel non limitatif, un diviseur 10 recevant la valeur de couple de freinage de lever de pied appliquée Tup, et la valeur R du rayon des roues du véhicule considéré. Le diviseur 10 délivre une valeur de force instantanée de freinage par inertie moteur à un module 11 de calcul de la valeur absolue de la force précitée.

La valeur absolue de cette force est elle-même délivrée à un multiplicateur 12 recevant également la valeur de l'amplitude de la vitesse instantanée V du véhicule. Le multiplicateur 12 délivre une valeur de puissance mécanique instantanée récupérée par inertie à un module intégrateur 14.

De préférence, la valeur de puissance mécanique instantanée délivrée au module intégrateur 14 est normée par un circuit diviseur 13 permettant, par exemple, d'exprimer directement la puissance instantanée précitée en kW par exemple.

Le module intégrateur 14 reçoit en outre un signal de remise à zéro, RS, ou "reset", ainsi que des valeurs d'initialisation, telles qu'une valeur initiale stockée en mémoire 17 et une valeur de conversion d'unités 18, de façon que le module intégrateur 14 délivre la valeur de puissance instantanée intégrée directement en unités d'énergie, telles que des kilos-Joules (kJ), par exemple. Dans cette hypothèse, la valeur de conversion d'unité 18 est la valeur 3600.

En outre, de préférence, la valeur d'énergie précitée correspondant à l'énergie de freinage récupérée par inertie délivrée par le module intégrateur 14 peut ensuite être soumise à une conversion en kilowatt-heures par un module 15, module diviseur par la valeur 3600, et en outre soumis à une correction 16 par un facteur de rendement noté K, correspondant aux pertes de conversion introduites entre les roues et la batterie, par le système de récupération d'énergie.

La valeur du facteur de rendement précité peut être établie expérimentalement pour chaque type de véhicule et chaque système de récupération d'énergie.

Les moyens d'estimation de l'énergie récupérée sur une commande de freinage électrique sont maintenant décrits en liaison avec la figure 3.

De manière particulièrement avantageuse on indique que, sur la figure 3, les références des éléments 20 à 28 désignent les mêmes éléments que les éléments 10 à 18 respectivement de la figure 2. Toutefois, la valeur d'entrée du diviseur 20 correspond bien entendu à la valeur de couple électrique de freinage appliqué Tef, substituée à la valeur de couple de freinage de lever de pied appliquée Tup de la figure 2.

Ainsi on comprend que le diviseur 20 délivre une valeur de force électrique de freinage, que le multiplicateur 22 délivre la puissance électrique de freinage instantanée récupérée et que le module intégrateur 24 délivre la valeur de puissance électrique instantanée récupérée. Les paramètres de vitesse V et de rayon R des roues du véhicule sont identiques à celles de la figure 2 et le mode opératoire des modules intermédiaires 21, 23, 25 et 26, 27, 28 est semblable à celui des modules 11, 13, 15 et 16, 17, 18 respectivement, de la figure 2.

Une description plus détaillée de l'agencement des ressources de mémorisation 3 sera maintenant donnée en liaison avec la figure 1.

Ainsi que représenté sur la figure précitée, les ressources de mémorisation 3 comprennent au moins une première mémoire tampon ou buffer (bloc mémoire) courante, noté Cₘ. Cette mémoire tampon Cₘ est destinée à mémoriser les valeurs d'énergie récupérée au cours d'un déplacement actuel du véhicule, ces valeurs étant reçues des modules 1,2.

Une pluralité de mémoires tampon spécifiques, notées Mₙ₋₁, Mₙ₋₂, Mₙ₋₃, est en outre prévue. Chaque mémoire tampon est destinée à mémoriser les valeurs d'énergie mécanique et électrique récupérée par tranche de distance de freinée déterminée.

Le mode opératoire des ressources mémoires est le suivant : la mémoire courante Cₘ est rafraîchie à l'extinction du calculateur EVC et les ressources d'estimation 1 et 2 et les mémoires spécifiques Mₙ₋₁ à Mₙ₋₃ sont rafraîchies lorsque les kilomètres freinés sont atteints.

Avantageusement, dans un mode de réalisation préférentiel non limitatif, les mémoires spécifiques précitées peuvent être dédiées chacune à des tranches de distance freinées spécifiques, correspondant à la durée de vie utile du véhicule. Un tel agencement permet non seulement de se démarquer de chaque trajet du véhicule mais également d'organiser le contrôle de la récupération d'énergie du véhicule, compte tenu de la durée de vie et des étapes de maintenance de ce dernier.

En particulier, les mémoires précitées peuvent être constituées par des mémoires programmables recevant les indicateurs propres à la vie et à l'utilisation du véhicule tel que l'odométrie de ce dernier. On indique enfin que les paramètres dynamiques du véhicule, lors de son utilisation, paramètres tels que vitesse instantanée, distance parcourue et bien entendu, distance freinée, peuvent être délivrées par le calculateur ESC par exemple ou déduites d'une information délivrée par un système GPS équipant le véhicule.

La distance freinée est calculée à partir de la vitesse instantanée, et par le couple de freinage.

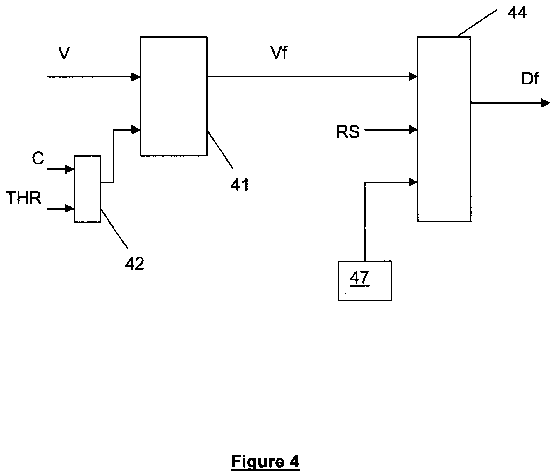

La figure 4 illustre un exemple d'estimation de distance freinée. En référence à cette figure, un module 42 reçoit :
- une valeur de couple de freinage global C issue d'un module (non représenté) permettant d'interpréter les signaux de capteurs de position de la pédale de frein, et de recalculer un couple de freinage pour le véhicule, et
- une valeur de seuil THR.

Lorsque la valeur de couple de freinage est inférieure en valeur absolue à la valeur seuil THR, la sortie du module 42 est un signal de valeur égale à zéro. Dans le cas contraire, ce signal de sortie a une valeur égale à 1.

Ce seuil THR peut être choisi relativement faible, par exemple égal à zéro.

Un module multiplicateur 41 reçoit en entrée les valeurs de vitesse instantanée V du véhicule, ainsi que les valeurs du signal de sortie du module 42 correspondant aux mêmes échantillons temporels. Ainsi le signal de vitesse pendant le freinage Vf a une valeur égale à la valeur du signal de vitesse V seulement lorsque la valeur du signal de couple C est supérieure à la valeur seuil THR.

Puis ce signal Vf est intégré en fonction du temps, grâce à un module intégrateur 44 recevant en outre un signal de remise à zéro, RS, ou "reset", ainsi que des valeurs d'initialisation, telles qu'une valeur initiale stockée en mémoire 47.

Le module intégrateur permet ainsi, par intégration temporelle de valeurs de vitesse, d'obtenir une estimation de la distance freinée Df.

### Variante

Dans un mode de réalisation alternatif, les moyens de traitement référencés 2 reçoivent en entrée le signal Tf plutôt que le signal Tef. L'énergie estimée par ces moyens de traitement correspond alors à une énergie récupérée globale. L'autre des moyens de traitement 1 permet d'estimer l'énergie liée au système de récupération d'énergie correspondant à la pédale d'accélération.

Cette variante peut être avantageuse en ce sens que l'estimation est effectuée à partir d'une valeur effectivement appliquée, ayant éventuellement subi un traitement après le sommateur. En outre cette variante peut permettre d'éviter certaines conversions.

Le dispositif d'estimation peut être hébergé dans le dispositif de répartition, dans un des systèmes de récupération d'énergie, dans le calculateur EVC, ou autre.

## Revendications

1. Procédé d'estimation d'énergie récupérée par un véhicule équipé d'un moyen de freinage régénératif, d'au moins deux systèmes de récupération d'énergie générant aux moins deux valeurs de consigne respectives (Tup, Tef) et destinées audit moyen de freinage régénératif, lesdits au moins deux systèmes de récupération d'énergie comprenant un premier système de récupération d'énergie à partir des signaux issus d'une pédale de frein et un deuxième système de récupération d'énergie à partir des signaux issus d'une pédale d'accélération, le procédé comprenant
une étape de réception d'une (Tup, Tef) desdites valeurs de consigne et
une étape de calcul d'une valeur d'énergie supplémentaire à partir de ladite valeur de consigne (Tup, Tef) reçue, **caractérisé en ce que** le procédé comprenant
une étape de réception d'une autre valeur, telle une valeur de mesure obtenue d'un capteur d'intensité de courant en entrée d'une batterie du véhicule, et
une étape d'estimation d'une énergie récupérée globale et d'une énergie récupérée liée au système de récupération d'énergie,
de telle sorte que l'énergie récupérée liée à l'autre système de récupération d'énergie est estimée en effectuant une différence entre la valeur estimée d'énergie récupérée globale et la valeur estimée d'énergie liée au système de récupération d'énergie.

2. Procédé selon la revendication 1, comprenant, pour la valeur de consigne (Tup, Tef) reçue et/ou l'autre valeur,
une étape de multiplication par une valeur de vitesse (V) du véhicule, pour obtenir une valeur de puissance,
une étape d'intégration temporelle de la valeur de puissance obtenue, de façon à obtenir une valeur d'énergie.

3. Procédé selon l'une des revendications 1 à 2, comprenant en outre stocker en mémoire la valeur estimée d'énergie récupérée ainsi qu'une valeur de distance freinée associée à ladite valeur estimée.

4. Procédé selon la revendication précédente, **caractérisé en ce que** la valeur de distance freinée est calculée à partir d'un signal de vitesse du véhicule (V) et à partir d'un signal de couple de freinage (C).

5. Véhicule comprenant un programme d'ordinateur comportant des instructions qui, lorsque le programme est exécuté par un ordinateur du véhicule, conduisent celui-ci à mettre en œuvre les étapes du procédé des revendications 1 à 4.

## Patentansprüche

1. Verfahren zur Schätzung von Energie, die von einem Fahrzeug, das mit einem Mittel zum regenerativen Bremsen ausgestattet ist, rekuperiert wird, wobei mindestens zwei Energierekuperationssysteme mindestens zwei jeweilige Sollwerte erzeugen (Tup, Tef), die für das Mittel zum regenerativen Bremsen bestimmt sind, wobei die mindestens zwei Energierekuperationssysteme ein erstes Energierekuperationssystem auf der Grundlage der Signale, die von einem Bremspedal ausgegeben werden, und ein zweites Energierekuperationssystem auf der Grundlage der Signale, die von einem Gaspedal ausgegeben werden, umfassen, wobei das Verfahren umfasst:
einen Schritt des Empfangens eines (Tup, Tef) der Sollwerte und
einen Schritt des Berechnens eines zusätzlichen Energiewertes auf der Grundlage des empfangenen Sollwertes (Tup, Tef), **dadurch gekennzeichnet, dass** der Schritt umfasst:
einen Schritt des Empfangens eines anderen Wertes, wie etwa eines Messwertes, der von einem Stromstärkensensor am Eingang einer Batterie des Fahrzeugs erhalten wird,
einen Schritt des Schätzens einer rekuperierten Gesamtenergie und einer rekuperierten Energie, die mit dem Energierekuperationssystem verbunden ist,
derart, dass die rekuperierte Energie, die mit dem anderen Energierekuperationssystem verbunden ist, geschätzt wird, indem eine Differenz zwischen dem Schätzwert der rekuperierten Gesamtenergie und dem Schätzwert der Energie, die mit dem Energierekuperationssystem verbunden ist, ermittelt wird.

2. Verfahren nach Anspruch 1, das für den empfangenen Sollwert (Tup, Tef) und/oder den anderen Wert umfasst:
einen Schritt des Multiplizierens mit einem Geschwindigkeitswert (V) des Fahrzeugs, um einen Leistungswert zu erhalten,
einen Schritt des Zeitintegrierens des erhaltenen Leistungswertes, um derart einen Energiewert zu erhalten.

3. Verfahren nach einem der Ansprüche 1 bis 2, das außerdem Ablegen des Schätzwertes der rekuperierten Energie sowie einen zu dem Schätzwert gehörenden Bremsabstandswert im Speicher umfasst.

4. Verfahren nach dem vorhergehenden Anspruch, **dadurch gekennzeichnet, dass** der Bremsabstandswert auf der Grundlage eines Fahrzeuggeschwindigkeitssignals (V) und auf der Grundlage eines Bremsmomentsignals (C) berechnet wird.

5. Fahrzeug, das ein Computerprogramm umfasst, das Anweisungen enthält, die bei Ausführung des Programms durch einen Computer des Fahrzeugs, dieses dazu veranlassen, die Schritte des Verfahrens der Ansprüche 1 bis 4 umzusetzen.

## Claims

1. Method for estimating energy recovered by a vehicle equipped with a regenerative braking means and at least two energy recovery systems generating at least two respective setpoint values (Tup, Tef) intended for said regenerative braking means, said at least two energy recovery systems comprising a first system for recovering energy on the basis of the signals output by a brake pedal and a second system for recovering energy on the basis of the signals output by an acceleration pedal, the method comprising
a step of receiving one (Tup, Tef) of said setpoint values and
a step of calculating an additional energy value from said received setpoint value (Tup, Tef), **characterized in that** the method comprises
a step of receiving another value, such as a measurement value obtained by a current strength sensor at the input of a battery of the vehicle, and
a step of estimating an overall recovered energy and a recovered energy associated with the energy recovery system,
in such a way that the recovered energy associated with the other energy recovery system is estimated by establishing a difference between the estimated value of overall recovered energy and the estimated value of energy associated with the energy recovery system.

2. Method according to Claim 1, comprising, for the received setpoint value (Tup, Tef) and/or the other value,
a step of multiplication by a speed value (V) of the vehicle so as to obtain a power value,
a step of temporal integration of the obtained power value so as to obtain an energy value.

3. Method according to either of Claims 1 and 2, further comprising storing in a memory the estimated recovered energy value as well as a braked distance value associated with said estimated value.

4. Method according to the preceding claim, **characterized in that** the braked distance value is calculated on the basis of a vehicle speed signal (V) and on the basis of a braking torque signal (C).

5. Vehicle comprising a computer programme comprising instructions which, when the program is carried out by a computer of the vehicle, lead the latter to implement the steps of the method of Claims 1 to 4.
